# EUROPEAN PATENT SPECIFICATION

(11) **EP 0 551 799 B1**
(45) Date of publication and mention of the grant of the patent: **24.04.1996**
(21) Application number: 92830650.5
(22) Date of filing: 01.12.1992
(51) Int. Cl.: F16H 61/18, F16H 57/04

(54) **A unit for operating a motor-vehicle gearbox**
Betätigungseinheit zum Schalten eines Fahrzeuggetriebes
Unité de commande d'une boîte de vitesse pour véhicule automobile

(30) Priority: 17.01.1992 IT TO920030
(43) Date of publication of application: 21.07.1993
(73) Proprietor: FIAT AUTO S.p.A., I-10135 Torino (IT)
(72) Inventor: Zoppi, Giovanni, I-10087 Valperga (Torino) (IT)
(74) Representative: Quinterno, Giuseppe

(56) References cited:
- EP-A- 0 084 751
- FR-A- 2 425 671
- FR-A- 2 436 906
- REVUE TECHNIQUE AUTOMOBILE. vol. 14, no. 503, May 1989, BOULOGNE-BILLANCOURT FR page 92 'REPERAGE DES BOITES DES VITESSES'

## Description

The subject of the present invention is a unit for operating a motor-vehicle gearbox, of the type including an operating lever which can be moved in order to select and engage the forward and reverse gears and a safety device associated with the lever for preventing the undesired engagement of the reverse gear.

According to a known solution currently in use, the safety device is formed with a flexible cable transmission which is slidable in a sheath having respective end stops, an enabling member being associated with the lever for releasing the safety device by means of the transmission. In such known solutions, the enabling member is generally constituted by a spring-loaded push-button carried at the top of the lever, the depression of the push-button resulting in a positive pull on the cable and the consequent release of the safety device.

This arrangement involves a fairly complex structure, since the enabling movement of the push-button in one direction (normally downwardly) has to correspond to a releasing pull on the cable in the opposite direction (normally upwardly).

A similar sheath remote actuation arrangement, in which however the end stops are fixed, is disclosed in FR-A-2436906.

The object of the present invention is to avoid the above-outlined problem and to simplify the construction of the operating unit mentioned above.

According to the invention, this object is achieved by a unit having the features defined in Claim 1.

By virtue of this concept, the safety device is released bya positive change in the geometry of the sheath, rather than a pull on the flexible cable. This simplifies the structure of the operating device since, according to a preferred embodiment of the invention, the movable end stop of the sheath is fixed directly to the enabling push-button and thus moves in the same direction as the latter and, in particular, downwardly in order to release the safety device. In this case, one end of the flexible cable is simply fixed to the lever in a position above the movable end stop.

The invention will now be described in detail with reference to the appended drawings, provided purely by way of non-limiting example, in which:
Figure 1 is a schematic elevational view of an operating unit according to the invention with the safety device in the engaged condition,
Figure 2 is a view similar to Figure 1 with the safety device in the released condition,
Figure 3 is a partial longitudinal section of the operating lever of the unit,
Figure 4 is a section taken on the line IV-IV of Figure 1, on an enlarged scale,
Figure 5 shows a variant of Figure 3, and
Figure 6 is a side elevational view taken on the arrow VI of Figure 5, on an enlarged scale.

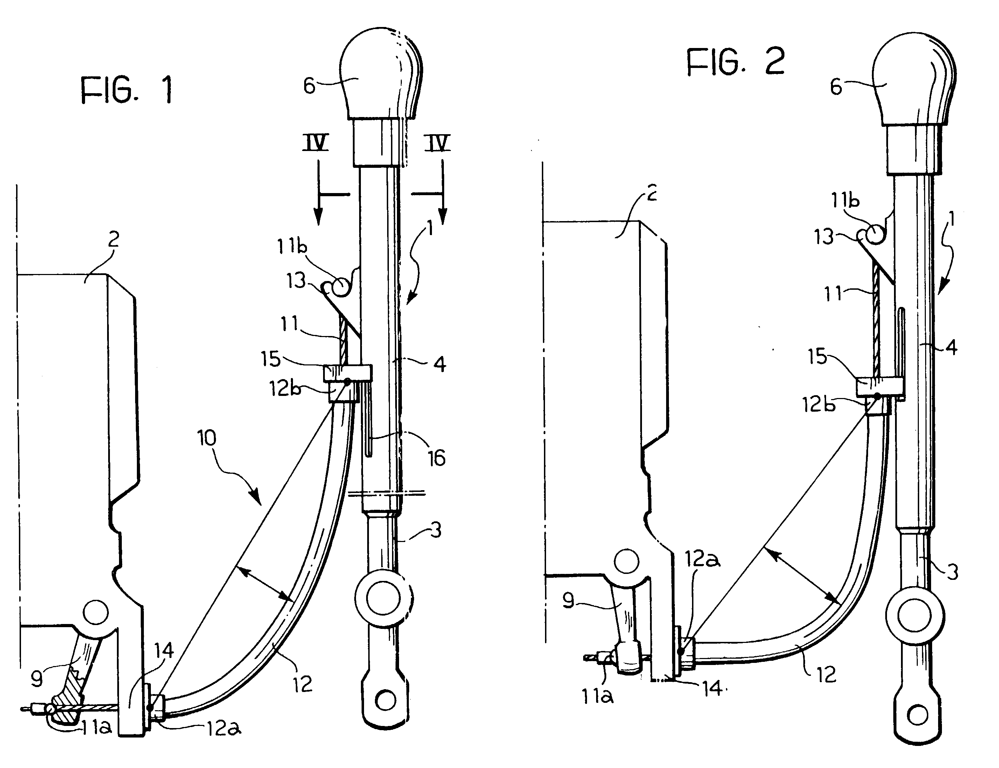

With reference initially to Figures 1 and 2, an operating lever, generally indicated 1, is movable, in known manner, in order to select and engage the forward and reverse gears of a motor-vehicle gearbox, schematically indicated 2. The lever 1 includes a rod 3 with a tubular upper portion 4 in the top of which a shaft 5, carrying an operating knob 6, can slide axially and telescopically. A helical compression spring 7 interposed between the end of the knob 6 and an internal annular shoulder 8 in the tubular portion 4 opposes the downward movement of the knob 6, and hence of the shaft 5, relative to the tubular portion 4 and the rod 3.

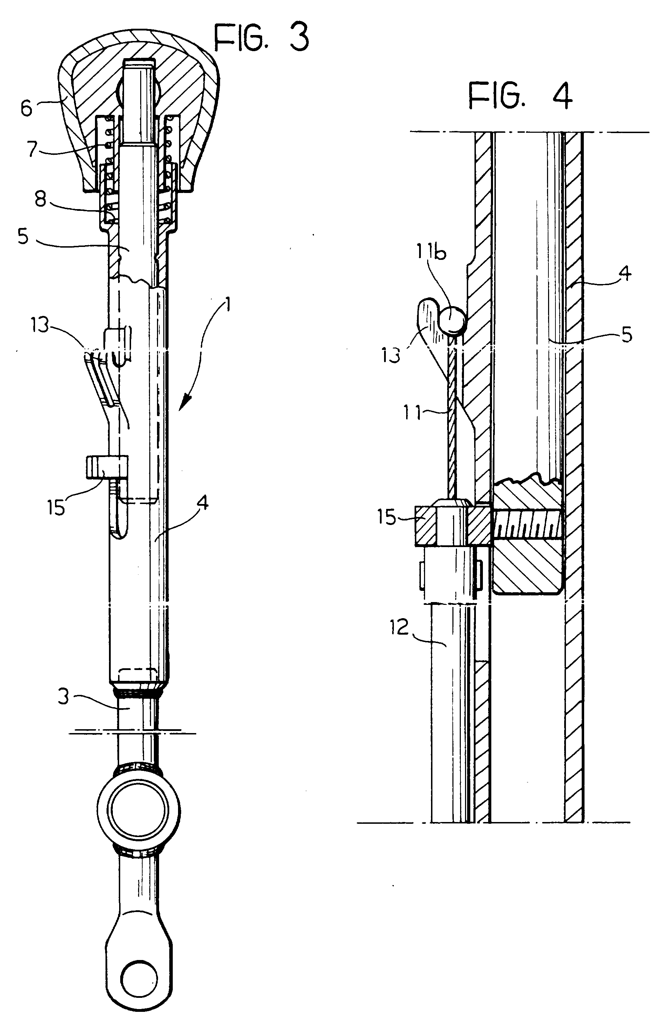

In generally known manner, the gearbox 2 has a safety device for preventing the accidental or undesired engagement of the reverse gear when the spring 7 is in the undeformed condition, that is, when the knob 6 is in the raised position shown in Figures 1 and 3. In the embodiment illustrated, the safety device includes a pivotable actuator lever 9 which is movable between a preventing position, shown in Figure 1, in which the engagement of the reverse gear is prevented, and an enabling position, shown in Figure 2, in which the reverse gear can be engaged. The displacement of the pivotable lever 9 between its preventing and enabling positions is controlled by means of the knob 6 through a transmission 10 including a flexible cable 11 slidable in a sheath 12 which is also flexible.

One end 11a of the cable 11 is fixed to the pivotable lever 9 and its opposite end 11b is fixed to a hook projection 13 on the tubular portion 4 of the operating lever 1.

The two ends 12a, 12b of the sheath 12 react against two end stops 14, 15, of which the former is fixed to the gearbox 2. The other end stop 15 is constituted by a radial appendage fixed near the lower end of the shaft 5 and projecting outwardly from the operating lever 1 through an axial slot 16 in the tubular portion 4, beneath the hook projection 13. The radial appendage 15 can slide along the slot 16 and, as shown in detail in Figure 4, the flexible cable 11 extends through it.

In operation, in order to move the pivotable lever 9 from its preventing position to its enabling position, the knob 6 has to be pushed downwardly against the action of the spring 7. As a result of this manoeuvre, the radial appendage 15 carried by the shaft 5 moves downwardly along the slot 16 to reach the position shown in Figure 2. The movement of the radial appendage 15, whose distance from the end stop 14 is correspondingly reduced, causes the sheath 12 and the flexible cable 11 to bend and, as a result of this, the end 11a of the cable 11 moves, pulling the pivoting lever 9 towards its enabling position. When the knob 6 is released, the initial configuration of Figure 1 is re-established by virtue of the action of the return spring 7.

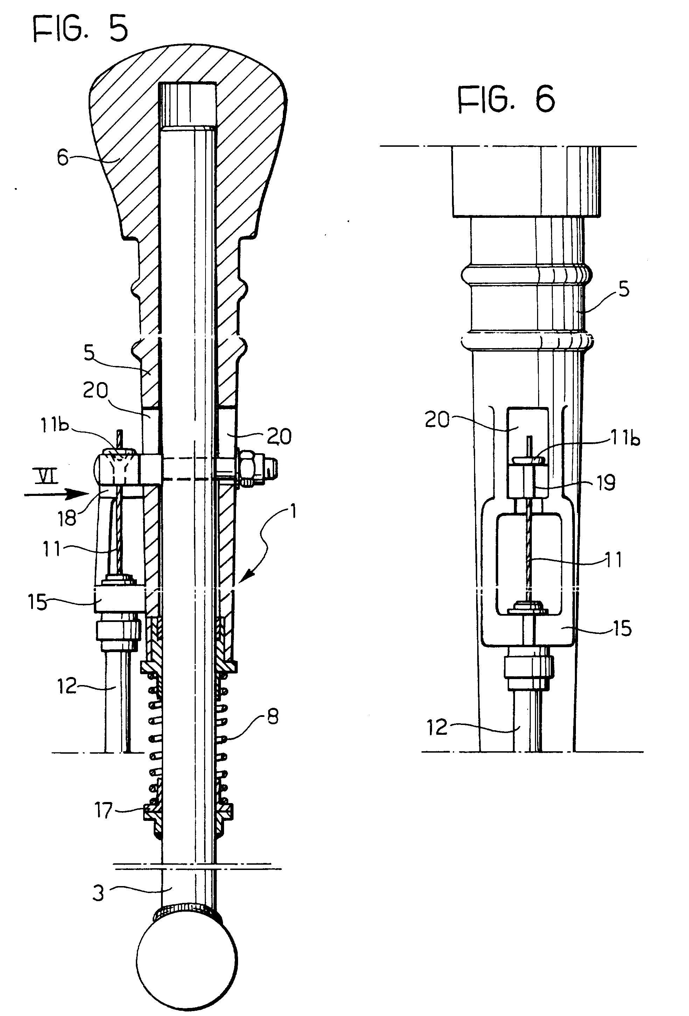

The variant shown in Figures 5 and 6 is generally similar to the embodiment described above and only the differences will be described in detail with the use of the same reference numerals for identical or similar parts.

In this variant, the shaft 5 fixed to the knob 6 is hollow and is slidable outside the rod 3 rather than within it. The return spring 7 is interposed between the base of the hollow shaft 5 and a bearing collar 17 fixed to the outside of the rod 3, and the end stop 15 of the sheath 12 is fixed to the outer wall of the hollow shaft 5. If the hollow shaft 5 is made of plastics material, the end stop 15 is conveniently moulded integrally with a portion 18 for guiding the cable 11 and the portion 18 bears, under the action of the spring 7, against a radial fixing appendage 19 for the end 11b of the cable 11. The appendage 19 is fixed to the rod 3 and extends through two opposed axial slots 20 in the hollow shaft 5.

The operation of the variant described above is completely identical to that of the previous embodiment; in fact, the depression of the knob 6 and the consequent downward movement of the hollow shaft 5 of this embodiment also moves the end stop 15 away from the end llb of the cable 11 and consequently bends the sheath 12, as a result of which the end 11a of the cable 11 moves, moving the pivotable lever 9 from its preventing position to the position in which it enables the reverse gear to be engaged.

## Claims

1. A unit for operating a motor-vehicle gearbox (2), including an operating lever (1) which can be moved in order to select and engage the forward and reverse gears and a safety device associated with the lever (1) for preventing the undesired engagement of the reverse gear, including a transmission (10) having a sheath (12) with end stops (14, 15) and a flexible cable (11) which is slidable in the sheath (12), and an enabling member (6) associated with the lever (1) for releasing the safety device by means of the transmission (10), in which the enabling member is constituted by a spring-loaded push-button means (7, 6) carried at the top of the lever (1), characterised in that the movement of the push-button enabling means (6) in order to release the safety device moves one of the end stops (15) of the sheath (12) of the transmission (10) so as to reduce its distance from the other end stop (14);
the movable end stop (15) of the sheath (12) being fixed to the push-button enabling means (6) and one end (11b) of the flexible cable (11) being fixed to the lever (1) in a position above the movable end stop (15).

2. An operating unit according to Claim 1, characterised in that the lever (1) includes a rod (3) and a shaft (5) which can slide telescopically relative to the rod (3), the shaft (5) being fixed to the push-button means (6) and carrying the movable end stop (15) of the sheath (12).

3. An operating unit according to Claim 2, characterised in that the rod (3) of the operating lever (1) has a hollow portion (4) and in that the shaft (5) can slide within the hollow portion (4).

4. An operating unit according to Claim 2, characterised in that the shaft (5) is hollow and is slidable outside the rod (3) of the operating lever (1).

## Patentansprüche

1. Einheit zur Betätigung eines Fahrzeuggetriebes (2) mit einem Betätigungshebel (1), welcher bewegbar ist, um die Vorwärtsgänge und den Rückwärtsgang zu wählen und zu schalten, mit einer dem Hebel (1) zugeordneten Sicherheitseinrichtung zur Verhinderung eines unerwünschten Schaltens in den Rückwärtsgang, mit Getriebemitteln (10) bestehend aus einer Hülle (12) mit Endanschlägen (14, 15) und einem in der Hülle (12) bewegbaren, biegsamen Seil (11), und mit einem dem Hebel (1) zugeordneten Element (6) zum Lösen der Sicherheitseinrichtung mit Hilfe der Getriebemittel (10), wobei das Löseelement von am oberen Ende des Hebels (1) angeordneten, federbelasteten Druckknopfmitteln (7, 6) gebildet ist, dadurch gekennzeichnet, daß die Bewegung der Druckknopfmittel (6) zum Lösen der Sicherheitseinrichtung einen der beiden Endanschläge (15) der Hülle (12) der Getriebemittel (10) bewegt, um seinen Abstand vom anderen Endanschlag (14) zu verringern; wobei der bewegliche Endanschlag (15) der Hülle (12) an den Druckknopfmitteln (6) und ein Ende (11b) des beweglichen Seiles (11) am Hebel (1) oberhalb des beweglichen Endanschlages (15) befestigt ist.

2. Betätigungseinheit nach Anspruch 1, dadurch gekennzeichnet, daß der Hebel (1) einen Schaft (3) und eine Stange (5) umfaßt, die relativ zum Schaft (3) teleskopisch bewegbar ist, wobei die Stange (5) an den Druckknopfmitteln (6) befestigt ist und den beweglichen Endanschlag (15) der Hülle (12) trägt.

3. Betätigungseinheit nach Anspruch 2, dadurch gekennzeichnet, daß der Schaft (3) des Betätigungshebels (1) einen hohlen Abschnitt (4) aufweist und die Stange (5) im hohlen Abschnitt (4) verschiebbar ist.

4. Betätigungseinheit nach Anspruch 2, dadurch gekennzeichnet, daß die Stange (5) hohl und außen auf dem Schaft (3) des Betätigungshebels (1) verschiebbar ist.

## Revendications

1. Unité pour commander une boîte de vitesses (2) de véhicule à moteur, comprenant un levier de commande (1) qui peut être déplacé pour sélectionner et enclencher les engrenages de marche avant et de marche arrière, et un dispositif de sécurité associé au levier (1) pour interdire l'enclenchement indésiré de l'engrenage de marche arrière, comprenant une transmission (10) qui possède une gaine (12) munie de butées d'extrémité (14, 15) et un câble flexible (11) qui peut coulisser dans la gaine (12), et un élément d'autorisation (6) associé au levier (1) pour dégager le dispositif de sécurité au moyen de la transmission (10), dans lequel l'élément d'autorisation est constitué par un moyen formant bouton-poussoir, chargé par ressort,(7, 6) monté à l'extrémité supérieure du levier (1), caractérisée en ce que le mouvement du moyen d'autorisation à bouton-poussoir (6) servant à dégager le dispositif de sécurité déplace l'une des butées d'extrémité (15) de la gaine (12) de la transmission (10) de manière à réduire la distance qui la sépare de l'autre butée d'extrémité (14) ; la butée d'extrémité mobile (15) de la gaine (12) étant fixée au moyen d'autorisation à bouton poussoir (6) et une extrémité (11b) du câble flexible (11) étant fixée au levier (1) dans une position située au-dessus de la butée d'extrémité mobile (15).

2. Unité de commande selon la revendication 1, caractérisée en ce que le levier (1) comprend une tige (3) et un corps (5) qui peut coulisser télescopiquement par rapport à la tige (3), le corps (5) étant fixé au moyen formant bouton-poussoir (6) et portant la butée d'extrémité mobile (15) de la gaine (12).

3. Unité de commande selon la revendication 2, caractérisée en ce que la tige (3) du levier de commande (1) possède une partie creuse (4) et en ce que le corps (5) peut coulisser dans la partie creuse (4).

4. Unité de commande selon la revendication 2, caractérisée en ce que le corps (5) est creux et peut coulisser à l'extérieur de la tige (3) du levier de commande (1).
